# EUROPÄISCHE PATENTSCHRIFT

(11) **EP 2 607 419 B1**
(45) Veröffentlichungstag und Bekanntmachung des Hinweises auf die Patenterteilung: **19.07.2017**
(21) Anmeldenummer: 12198055.1
(22) Anmeldetag: 19.12.2012
(51) Int. Cl.: C08K 5/098, C08K 5/10, C08K 5/20, B29C 45/40

(54) **Entformungsmittelkombinationen**
Reforming agent combinations
Combinaisons d'agents de démoulage

(30) Priorität: 21.12.2011 EP 11194964
(43) Veröffentlichungstag der Anmeldung: 26.06.2013
(73) Patentinhaber: LANXESS Deutschland GmbH, 50569 Köln (DE)
(72) Erfinder: Benighaus, Tobias, 40215 Düsseldorf (DE); Joachimi, Detlev, 47800 Krefeld (DE); Weider, Richard, 51381 Leverkusen (DE)

(56) Entgegenhaltungen:
- EP-A1- 0 792 917
- EP-A1- 1 164 162
- WO-A1-2004/083301
- US-A- 5 563 190

## Beschreibung

Die vorliegende Erfindung liegt auf dem Gebiet der Kunststoffe und betrifft die Verwendung von Entformungsmittelkombinationen zu deren Verarbeitung, wobei es sich bei dem Kunststoff um Polyamid handelt. Die Entformungsmittelkombinationen enthalten mindestens ein Amidwachs und mindestens ein Esterwachs und ein verseiftes Wachs.

Der Spritzguss ist eines der üblichen Verfahren zur Herstellung von Formteilen aus thermoplastischen Kunststoffen. Bei diesem Verfahren muss das gespritzte Formteil abschließend aus dem Formwerkzeug entfernt bzw. entnommen werden. Aufgrund starker Adhäsionskräfte zwischen der abgeschreckten Polymerschmelze und der Werkzeugwand ist dieser Schritt häufig mit hohen Entformungskräften verbunden. Um eine Verformung des Formteils zu vermeiden, muss mit der Entformung gewartet werden bis das Formteil durch den Abkühlungsprozess eine ausreichende Steifigkeit erlangt hat. Daher können starke Adhäsionskräfte zwischen Werkzeugwand und Formteil die Zykluszeit signifikant verlängern und die Produktionskosten des Formteils erhöhen.

Stand der Technik ist die Zugabe von Entformungsmitteln zu thermoplastischen Kunststoffen oder/und das Einsprühen der Spritzgussformen mit geeigneten Formtrennmitteln. Die Entformungsmittel reduzieren die für die Entformung notwendigen Kräfte. Es wird angenommen, dass die Entformungsmittel in der Grenzfläche zwischen Formteil und Werkzeugwand oberflächenaktiv wirken und so die Adhäsionskräfte reduzieren. Entformungsmittel mit dieser Wirkung werden auch als Formtrennmittel oder äußere Gleitmittel bezeichnet.

Neben dieser Wirkung als äußere Gleitmittel zeigen Entformungsmittel meist zudem eine Wirkung als innere Gleitmittel und erhöhen oft die Fließfähigkeit der Schmelze. Dies erleichtert die Füllung des Formwerkzeugs, erlaubt die Füllung des Formwerkzeugs unter milderen Verarbeitungsbedingungen und reduziert die Wahrscheinlichkeit lokaler Überhitzungen durch überhöhte Scherbeanspruchung der Schmelze.

In thermoplastischen Kunststoffen, besonders in technischen Thermoplasten, insbesondere beim Einsatz von Polyamid, werden üblicherweise langkettige Carbonsäuren sowie deren Seifen, Ester oder Amide als Entformungsmittel eingesetzt, mitunter auch polare oder unpolare Polyethylenwachse. Dabei zeigt jedes dieser Entformungsmittel in jedem Thermoplasten unterschiedliche spezifische Vor- und Nachteile.

In technischen Thermoplasten, wie dem Polyamid, gehen langkettige Carbonsäuren und deren Seifen bei den hohen Temperaturen, die im Spritzguss-Verfahren notwendig sind, ungewünschte Umamidierungs- oder Umesterungsreaktionen mit den Polymerketten ein. Diese Reaktionen führen zu einer Reduktion der Länge der Polymerketten, welche sich negativ auf die mechanischen Eigenschaften des Formteils auswirkt. Dafür zeigen diese Entformungsmittel eine gute Wirkung als innere wie äußere Gleitmittel.

Ester und Amide langkettiger Carbonsäuren zeigen auch bei hohen Temperaturen nur selten ungewollte Nebenreaktionen in der Schmelze und führen daher nicht zu einem Kettenabbau. Diese Substanzen weisen jedoch eine gute Verträglichkeit mit technischen Thermoplasten auf, migrieren nur in geringem Maße an deren Oberfläche und zeigen daher auch nur eine geringere Wirksamkeit als Entformungsmittel.

Polyethylenwachse zeigen oft keine ausreichende Wirkung als Entformungsmittel und können außerdem zur Bildung von sichtbaren Belägen auf der Oberfläche des Formteils führen.

US 5 563 190 A offenbart Phenolharz-Zusammensetzungen die neben einem organischen Füllstoffe und einem anorganischen Füllstoff eine Entformungsmittelkombination auf Basis eines Amidwachses, eines Esterwachses und/oder eines verseiften Wachses jeweils mit Schmelzpunkt im Bereich von 80 - 105 Grad Celsius enthalten.

EP 1 164 162 A1 beschreibt thermoplastisch verarbeitbare Formmassen aus mindestens einem thermoplastischen Elastomeren wobei die Mischung mindestens ein Fettsäureamidesterwachs, natürliche und/oder synthetische Kieselsäure und ein Montanwachs enthält.

EP 0 792 917 A1 beschreibt Carbonsäureamidesterwachs enthaltende thermoplastisch verarbeitbare Polyurethane.

WO 2004/083301 A1 offenbart extrudierbare Cellulose-verstärkte Harz-enthaltende Zusammensetzungen unter anderem enthaltend oxidiertes Polyethylenwachs, Esterwachs und Amidwachs.

DE AS 1298671 offenbart Entformungsmittel für Polyamid-Formmassen und lehrt unter anderem den Einsatz von Calciumstearat.

Die Aufgabe der vorliegenden Erfindung war es, ein Entformungsmittel für Polyamide zu finden, das die Adhäsionskräfte zwischen Formteil und Werkzeugwand gegenüber bisher üblichen, für Polyamid zu verwendenden, Entformungsmitteln reduziert und keinen oder nur einen geringen Abbau der Kettenlänge des Thermoplasten während der Verarbeitung bewirkt.

Diese Aufgabe konnte gelöst werden durch die Verwendung von einer Entformungsmittelkombination, die A. mindestens ein Amidwachs sowie B, mindestens ein Esterwachs und C. mindestens ein verseiftes Wachs enthält.

Gegenstand der vorliegenden Erfindung ist die Verwendung einer Entformungsmittelkombination zum Entformen von Kunststoffen, enthaltend:
A. mindestens ein Amidwachs und
B. mindestens ein Esterwachs und
C. mindestens ein verseiftes Wachs,
wobei als Amidwachs Ethylenbisstearylamid, als Esterwachs Ester von wenigstens einer Carbonsäure der Reihe Margarinsäure, Stearinsäure, Arachinsäure und Behensäure, insbesondere Stearinsäure, mit wenigstens einem Alkohol der Reihe Erythrit, Pentaerythrit, Di-Pentaerythrit, Tri-Pentaerythrit, Trimethylolpropan, Glyzerin, Di-Glyzerin, Tri-Glyzerin, Xylit, Mannit, Sorbit, Ethylenglykol, 1,3-Propylenglykol, 1,4-Butandiol, 2,3-Butandiol, 1,5-Pentandiol, 1,6-Hexandiol, Laurylalkohol, Isotridecylalkohol, Myristylalkohol, Palmitylalkohol, Stearylalkohol, Isostearylalkohol, Arachylalkohol, Behenylalkohol, Lignocerylalkohol, Cerotylalkohol, Montanylalkohol sowie deren technische Mischungen eingesetzt werden, und als verseiftes Wachs Calciumstearat eingesetzt wird, wobei es sich bei dem Kunststoff um Polyamid handelt.

Die aliphatischen Carbonsäuren können alleine oder in Mischung eingesetzt werden. Bevorzugt werden technische aliphatische Carbonsäuren eingesetzt, die normalerweise als Mischung von Carbonsäuren mit unterschiedlicher Kettenlänge vorliegen, wobei eine Kettenlänge dominiert. Besonders bevorzugt wird technische Stearinsäure eingesetzt, die hauptsächlich Stearinsäure enthält sowie in geringeren Mengen Palimtinsäure und andere Carbonsäuren.

Erfindungsgemäß wird als Amidwachs Ethylenbisstearamid eingesetzt. Insbesondere ganz besonders bevorzugt wird Ethylenbisstearamid, hergestellt aus technischer Stearinsäure, eingesetzt, die eine Mischung der reinen Stearinsäure mit weiteren Carbonsäuren, hauptsächlich Palmitinsäure, ist.

Die Erfindung betrifft deshalb bevorzugt die Verwendung von Entformungsmittelkombinationen dadurch gekennzeichnet, dass diese
A. 5 - 70 Gew.%, bevorzugt 20 - 70 Gew.-%, besonders bevorzugt 30 - 50 Gew.-%, mindestens eines Amidwachses,
B. 5 - 70 Gew.-%, bevorzugt 20 - 60 Gew.-%, besonders bevorzugt, 30 - 50 Gew.-%, mindestens eines Esterwachses, und
C. 5 - 50 Gew.-%, bevorzugt 10 - 40 Gew.-%, besonders bevorzugt 15 - 35 Gew.-%, mindestens eines verseiften Wachses enthalten, wobei die Summe aller Gewichtsprozente in der Entformungsmittelkombination stets 100 ergibt.

Die erfindungsgemäßen Entformungsmittelkombinationen können neben den Komponenten Amidwachse, Esterwachse und verseifte Wachse beliebige weitere Inhaltsstoffe haben. Bevorzugt werden diese Inhaltsstoffe üblicherweise als Entformungsmittel für Kunststoffe eingesetzt. Bevorzugte zusätzliche Entformungsmittel der Komponente D. sind polare und unpolare Polyethylenwachse, alpha-Olefine, Fettsäuren oder Fettsäurealkohale. Durch Einsatz der Komponente D. werden die Gewichtsprozente der Komponenten A, B. und/oder C. entsprechend reduziert, so dass die Summe aller Gewichtsprozente in der Entformungsmittelkombination stets 100 ergibt.

Bevorzugt als zusätzliche Entformungsmittel der Komponente D. einzusetzende Fettsäuren sind Laurinsäure, Isotridecansäure, Myristinsäure, Palmitinsäure, Margarinsäure, Stearinsäure, Isostearinsäure, Arachinsäure, Behensäure, Lignocerinsäure, Cerotinsäure, Montansäure oder Melissinsäure.

Bevorzugt als Entformungsmittel der Komponente D. einzusetzende Fettsäurealkohole sind Laurylalkohol, Isotridecylalkohol, Myristylalkohol, Palmitylalkohol, Daturylalkohol, Stearylalkohol, Isostearylalkohol, Arachylalkohol, Behenylalkohol, Lignocerylalkohol, Cerotylalkohol, Montanylalkohol.

Bevorzugt als Komponente D. einzusetzende unpolare Polyethylenwachse werden durch Polymerisation von Ethylen oder Degradation von Polyethylen hergestellt. Bei der Polymerisation können neben Ethylen auch andere Co-Monomere eingesetzt werden. Bevorzugte Co-Monomere weisen 2 bis 10 Kohlenstoffatome und mindestens eine Doppelbindung zwischen zwei Kohlenstoffatomen auf. Besonders bevorzugte Co-Monomere sind Propen, Buten, Butadien, Penten, Pentadien, Hexen und Hexadien.

Bevorzugte polare Polyethylenwachse werden durch Oxidation unpolarer Polyethylenwachse, durch Polymerisation von Ethylen mit polaren Co-Monomeren oder Pfropfung polarer ungesättigter Monomere an Polymethylen hergestellt. Bevorzugte Co-Monomere weisen 2 bis 10 Kohlenstoffatome und mindestens eine Doppelbindung zwischen zwei Kohlenstoffatomen sowie eine polare Gruppe auf. Besonders bevorzugte Co-Monomere sind Acrylsäure, Acrylsäureester, Methacrylsäureester und Vinylacetat. Ein besonders bevorzugtes polares Polyethylenwachs ist Licolub H12 von Clariant GmbH.

Bevorzugt als Komponente D. einzusetzende alpha-Olefine sind linear oder verzweigt und haben eine Kettenlänge von mindestens 12 Kohlenstoffatomen, besonders bevorzugt von mindestens 18 Kohlenstoffatomen.

Bevorzugt sind Entformungsmittelkombinationen, bei denen der Anteil anderer Komponenten als Amidwachse, Esterwachs oder verseifte Wachse kleiner 25 Gew.%, besonders bevorzugt kleiner 10 Gew.-% ist. Ganz besonders bevorzugt sind Entformungsmittelkombinationen, die ausschließlich Amidwachse, Esterwachse und/oder verseifte Wachse enthalten, also die Komponenten A., B. und C. enthalten.

In einer bevorzugten Ausführungsform betrifft die vorliegende Erfindung Entformungsmittelkombinationen, die mindestens A. ein Amidwachs sowie B. ein Esterwachs und C. ein verseiftes Wachs enthalten worin als Amidwachs Ethylenbisstearylamid, als Esterwachs Glycerintristearat oder Stearylstearat und als verseiftes Wachs Calciumstearat eingesetzt wird.

Die vorliegende Erfindung betrifft deshalb auch die Verwendung solcher Entformungsmittelkombinationen zum Entformen bevorzugt von Polyamid-basierten oder Copolyamidbasierten Formmassen, ganz besonders bevorzugt von Polyamid 6- oder Polyamid 66- oder Co-Polyamid-basierten Formmassen bzw. der daraus herzustellenden Erzeugnisse.

Bevorzugt werden die individuellen Entformungsmittel A., B. und C. sowie in einer weiteren Ausführungsform noch D. in ihrer jeweiligen Darreichungsform zuerst gemischt und als Entformungsmittelkombination dem Polyamid zugegeben. Die Homogenisierung der Ent formungsmittelkombination ist nur soweit notwendig, dass die Entformungsmittel nach der Herstellung der Polyamid-Formmassen gleichmäßig in diesen verteilt sind. Eine gleichmäßige Verteilung der Entformungsmittel in den Polyamid-Formmassen kann auch erreicht werden, indem die einzelnen Entformungsmittel separat dem Polyamid zugegeben werden. Besonders bevorzugt ist die Verwendung bei der die Komponenten der Entformungsmittelkombination gemischt und konfektioniert und anschließend die Entformungsmittelkombination dem Polyamid zugegeben wird. Ganz besonders bevorzugt ist die Verwendung, bei der
1. die Komponenten der Entformungsmittelkombination ausgeschmolzen,
2. im geschmolzenen Zustand durchmischt,
3. bis zur Erstarrung abgekühlt,
4. konfektioniert, und
5. dem Polyamid zugegeben werden.

Bevorzugt werden die Schritte 1 bis 4 dieses Verfahrens in einem gleichläufigen Zweiwellenextruder oder Buss-Kneter durchgeführt. Besonders bevorzugt geschieht dies bei einer Temperatur im Extruder oder Kneter, die oberhalb des Schmelzpunktes derjenigen Komponente der Entformungsmittelkombination mit dem höchsten Schmelzpunkt liegt.

Als Konfektionierung wird im Sinne dieser Erfindung jeder Prozess verstanden, der die Mischung der Entformungsmittel in eine Darreichungsform überführt, die zu einer einfachen Verarbeitung bei der Herstellung der Polyamid-Formmassen führt. Bevorzugt sind solche Darreichungsformen, die nur einen geringen Anteil an feinteiligen Partikeln aufweisen oder beim Transport, bei der Förderung, Dosierung oder sonstigen Verarbeitung ausbilden. Als feinteilige Partikel werden hier Partikel betrachtet, die entlang einer Raumrichtung eine Länge unterhalb von 500 µm, bevorzugt unterhalb von 200 µm, besonders bevorzugt unterhalb von 100 µm aufweisen. Als geringen Anteil wird ein Anteil von weniger als 10 Gew.-%, bevorzugt weniger als 5 Gew.-%, besonders bevorzugt weniger als 2 Gew.-% angesehen. Bevorzugte Prozesse sind das Kompaktieren von Pulvern mit oder ohne zusätzliche Bindemittel, das Granulieren eines Schmelzestrangs, das Abtropfen einer Schmelze zur Darstellung von Prills oder das Zerschlagen einer erstarrten Schmelze zu Schuppen (flakes).

In einer bevorzugten Ausführungsform betrifft die vorliegende Erfindung die Verwendung bei der die Entformungsmittel A., B. und C. vor der Zugabe zum Kunststoff ausgeschmolzen, im geschmolzenen Zustand zur Entformungsmittelkombination durchmischt, zur Erstarrung abgekühlt und anschließend die Entformungsmittelkombination konfektioniert wird.

Die zu verwendenden Formmassen können nach Verfahren, die dem Fachmann bekannt sind, insbesondere durch Extrudieren, Blasformen oder Spritzgießen, zu Erzeugnissen verarbeitet werden. Es kann weiterhin vorteilhaft sein, Formteile oder Halbzeuge aus einer bei Raumtemperatur, bevorzugt 0 bis 40 °C, hergestellten physikalischen Mischung (Dryblend) vorgemischter Komponenten und/oder einzelner Komponenten direkt herzustellen.

Besonders bevorzugt wird die erfindungsgemäße zu verwendende Entformungsmittelkombination bei Polyamiden angewandt, die in technischen Anwendungen zum Einsatz kommen, ganz besonders bevorzugt bei semi-kristallinen Polyamiden mit einem Schmelzpunkt von mindestens 180 °C oder amorphen Polyamiden mit einer Glasübergangstemperatur von mindestens 150 °C.

Insbesondere bevorzugt sind Polyamid 6 oder Polyamid 66 oder Co-Polyamide auf der Basis von Polyamid 6 und/oder Polyamid 66, oder Blends dieser Polyamide mit weiteren thermoplastischen Polymeren, insbesondere der Reihe Polyphenylenoxid, Polyethylen oder Polypropylen.

In einer bevorzugten Ausführungsform kann der Thermoplast auch ein Blend unterschiedlicher thermoplastischer Polymere sein, wovon wenigstens eines Polyamid ist.

Die mit erfindungsgemäße zu verwendender Entformungsmittelkombination ausgestatteten Polyamid Formmassen können neben der Entformungsmittelkombination und dem Polyamid noch Füll- oder Verstärkungsstoffe und/oder weitere Additive enthalten.

Erfingdungsgemäß bevorzugt einzusetzende Füll- und Verstärkungsstoffe sind mineralische Füllstoffe, insbesondere Calciumcarbonat, Wollastonit, Phlogopit, Muskovit, Kaolin, Talkum, Calcium-Sulfat, Barium-Sulfat sowie Glasfasern, Carbonfasern, Aramidfasern, Kohlenstoffnanoröhren, Glaskugeln oder Hohlglaskugeln.

Weitere Additive sind bevorzugt Thermostabilisatoren, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähigkeitsmodifikatoren, Gleitmittel, Farbstoffe oder Pigmente. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, 938, 966 aufgefunden werden. Die Additive können alleine oder in Mischung bzw. in Form von Masterbatchen eingesetzt werden.

Als Additiv einzusetzende Thermostabilisatoren in den Polyamid-Formmassen sind Kupferverbindungen, insbesondere Kupferhalogenide in Kombination mit Alkalimetallhalogeniden, sterisch gehinderte Phenole und/oder Phosphite, Hydrochinone, aromatische sekundäre Amine, insbesondere Diphenylamine, substituierte Resorcine, Salicylate, Benzotriazole oder Benzophenone, sowie verschieden substituierte Vertreter dieser Gruppen und/oder deren Mischungen.

Als Additiv einzusetzende UV-Stabilisatoren sind substituierte Resorcine, Salicylate, Benzotriazole oder Benzophenone.

Als Schlagzähmodifikatoren oder Elastomer-Modifikatoren werden Copolymerisate eingesetzt, die bevorzugt aus mindestens zwei Monomeren der Reihe Ethylen, Propylen, Butadien, Isobuten, Isopren, Chloropren, Vinylacetat, Styrol, Acrylnitril und Acryl- bzw. Methacrylsäureester mit 1 bis 18 Kohlenstoffatomen in der Alkoholkomponente aufgebaut sind. In einer bevorzugten Ausführungsform enthalten die Copolymerisate kompatibilisierende Gruppen, bevorzugt Maleinsäureanhydrid oder Epoxid.

Als Additiv einzusetzende Farbstoffe oder Pigmente sind anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone sowie andere Farbmittel.

Als Additiv einzusetzende Nukleierungsmittel sind Natrium- oder Calciumphenylphosphinat, Aluminiumoxid oder Siliciumdioxid oder Talkum, besonders bevorzugt Talkum.

### Beispiele

Zum Nachweis der erfindungsgemäß beschriebenen Verbesserungen wurden zunächst durch Compoundierung entsprechende Kunststoff Formmassen angefertigt.

Die einzelnen Komponenten wurden in einem Zweiwellenextruder des Typs ZSK 32 Compounder der Firma Coperion Werner & Pfleiderer (Stuttgart, Deutschland) bei einer Temperatur von ca. 280 °C gemischt, als Strang in ein Wasserbad ausgetragen, bis zur Granulierfähigkeit abgekühlt und granuliert. Das Granulat wurde zwei Tage bei 70 °C im Vakuumtrockenschrank getrocknet.

Die in den folgenden zwei Tabellen dargestellten Zusammensetzungen wurden alle nach der oben beschriebenen Weise verarbeitet.

Zur Bestimmung der Entformungswirkung wurden Haft- und Gleitreibungskoeffizienten (Tabellen 3 und 4) sowie die Entformungskräfte an einem Bauteil (Tabellen 1 und 2) für erfindungsgemäße und nicht-erfindungsgemäße Entformungsmittelkombinationen gemessen.

Die Entformungskräfte wurden bestimmt, indem ein rechteckiges Formteil mit Verstärkungsrippen im Spritzguss-Verfahren hergestellt und die für die Entformung notwendigen Kräfte am Auswerfer aufgezeichnet wurden. Die thermoplastischen Formmassen wurden mit einer Massetemperatur von 280 °C (an der Düse) in die Form gespritzt. Die Form wurde auf eine Temperatur von 80 °C temperiert. Nach einer Nachdruckzeit von 8 Sekunden bei einem Nachdruck von 350 bar wurde das Formteil 20 Sekunden abgekühlt und anschließend entformt. Bei der Entformung kamen 12 Entformungsstifte zum Einsatz, die über eine Metallplatte gemeinsam pneumatisch bewegt wurden. Die Kräfte, die notwendig waren, um die 12 Entformungsstifte gegen das Formteil zu drücken und so das Formteil zu entformen, wurden elektronisch über einen Kraftsensor aufgezeichnet. Die höchste auftretende Kraft wurde als Entformungskraft betrachtet.

Die Fließgeschwindigkeit der Schmelze hängt neben anderen Faktoren von der Polymerkettenlänge ab. Die Veränderung der durchschnittlichen Polymerkettenlänge bei thermischer Belastung wurde daher über die Veränderung der Volumen-Fließrate (melt volume rate, MVR) nach thermischen Belastungen unterschiedlicher Dauer bestimmt. Polyamid-Polymerketten können bei hohen Temperaturen und bei Anwesenheit von Wasser-Molekülen Abbaureaktionen durchlaufen, die zu einer Reduktion der durchschnittlichen Polymerkettenlänge und so zu einer Erhöhung des MVR-Wertes führen. Die Zusammensetzungen in den folgenden Beispielen wurden deshalb angefeuchtet bis ein für alle Proben vergleichbarer Wassergehalt von ca. 0,15 Gew.-% erreicht wurde. Anschließend wurden MVR-Werte mit Vorheizzeiten von 5 und 20 Minuten bei 280 °C mit einer Nennlast von 5 kg gemäß DIN EN ISO 1133 bestimmt. Die Differenz zwischen den MVR-Werten nach 5 und 20 Minuten Vorheizzeit wurde als Maß für den Abbau des Polymers verwendet, je größer die MVR-Differenz desto stärker der unerwünschte Polymerabbau.

**Tabelle 1: Zusammensetzung der verstärkten Formmassen (Angaben in Gew.-%), Entformungskräfte und MVR-Differenzen**

| **Inhaltsstoffe** | **Vergl.-Bsp. 1** | **Vergl.-Bsp. 2** | **Vergl.-Bsp. 3** | **Vergl.-Bsp. 4** | **Vergl.-Bsp. 5** | **Vergl.-Bsp. 6** | **Vergl.-Bsp.7** | **Bsp 1** | **Bsp. 2** | **Bsp. 3** | **Bsp. 4** |
|---|---|---|---|---|---|---|---|---|---|---|---|
| Co-Polyamid | 84,78 | 84,68 | 84,78 | 84,68 | 84,78 | 84,78 | 84,78 | 84,78 | 84,75 | 84,75 | 84,78 |
| Glasfaser | 15 | 15 | 15 | 15 | 15 | 15 | 15 | 15 | 15 | 15 | 15 |
| Talkum | 0,02 | 0,02 | 0,02 | 0,02 | 0,02 | 0,02 | 0,02 | 0,02 | 0,02 | 0,02 | 0,02 |
| Ca-Stearat | 0,2 | 0,3 | | | | | | 0,1 | 0,07 | 0,06 | 0,05 |
| Ethylenbisstearylamid | | | 0,2 | 0,3 | | | 0,08 | 0,05 | 0,05 | 0,17 | 0,05 |
| Glyzerintristearat | | | | | 0,2 | | | 0,05 | 0,06 | | 0,05 |
| Stearylstearat | | | | | | 0,2 | | | | | 0,05 |
| ox. PE-Wachs | | | | | | | 0,12 | | 0,05 | | |
| | | | | | | | | | | | |
| Entformungskraft [N] | 1325 | 1298 | 1554 | 1438 | 1857 | 1524 | 1314 | 1064 | 1032 | 1098 | 1012 |
| MVR-Differenz [cm³/10 min] | 50 | 61 | 29 | 25 | 20 | 21 | 23 | 21 | 32 | 21 | 26 |

**Tabelle 2: Zusammensetzung der unverstärkten Formmassen (Angaben in Gew.-%), Entformungskräfte und MVR-Differenzen.**

| **Inhaltsstoffe V** | **Vergleichsbeispiel 8** | **Vergleichsbeispiel 9** | **Beispiel 5** |
|---|---|---|---|
| PA66 | 99,54 | 99,54 | 99,54 |
| Talkum | 0,06 | 0,06 | 0,06 |
| Ca-Stearat | 0,4 | | 0,1 |
| Ethylenbisstearylamid | | 0,4 | 0,1 |
| Glyzerintristearat | | | 0,1 |
| Stearylstearat | | | 0,1 |
| ox. PE-Wachs | | | |
| | | | |
| Entformungskraft [N] | 873 | 895 | 809 |
| MVR-Differenz [cm³/10 min] | 126 | 41 | 74 |

Diese Beispiele zeigen, dass erfindungsgemäße Entformungsmittelkombinationen zu deutlich reduzierten Entformungskräften führen. Ähnliche Reduktionen der Entformungskraft lassen sich mit herkömmlichen Entformungsmitteln selbst bei Konzentrationserhöhungen von 50 % nicht realisieren (Vergleichbeispiele 2 und 4). Auch Kombinationen von Entformungsmitteln, die nicht der vorliegenden Erfindung entsprechen, zeigen eine signifikant schlechtere Entformungswirkung (Vergleichsbeispiel 7).

Unter den herkömmlichen Entformungsmitteln in diesen Beispielen zeigt Calcium-Stearat die beste Entformungswirkung. Die Ergebnisse der MVR-Differenz belegen jedoch, dass Calcium-Stearat zu einem deutlichen Abbau der Polymerketten führt (Vergleichsbeispiele 1, 2, 8). Die anderen herkömmlichen Entformungsmittel (Amid- und Ester-Wachse) zeigen bessere Ergebnisse bei der MVR-Differenz und führen nur zu einem geringen Kettenabbau. Dafür ist ihre Entformungswirkung deutlich schlechter (Vergleichsbeispiele 3-7, 9). Die erfindungsgemäßen Entformungsmittelkombinationen zeigen ein durchweg besseres Entformungsverhalten als die einzelnen Entformungsmittel. Gleichzeitig liegen die Werte für die MVR-Differenz auf einem ähnlichen Niveau wie bei den Amid- oder Ester-Wachsen, die keinen deutlichen Kettenabbau hervorrufen.

Die Haftung des Formteils am Werkzeug wird unter anderem durch die Haft- und Gleitreibungskoeffizienten bestimmt. Eine leichte Entformbarkeit korreliert daher mit niedrigen Werten für die Haft- und Gleitreibungskoeffizienten.

Die Haft- und Gleitreibungskoeffizienten wurden bestimmt, indem kreisförmige Prüfteller mit einem Durchmesser von 95 mm mit einem verzahnten Außenring im Spritzguss-Verfahren hergestellt werden. Eine spezielle Konstruktion des Werkzeugs ermöglicht es, die Haft- und Gleitreibungskoeffizienten ohne Entformung des Prüftellers zu messen: Während des Abkühlens des Formteils wird von einer Seite auf den Prüfteller über einen Stempel ein definierter Druck aufgebracht und anschließend das Werkzeug auf dieser Seite geöffnet und der Anguss abgebrochen. Während dieser Vorgänge löst sich das Formteil nicht von der anderen Werkzeugseite. Abschließend wird der Prüfteller über den verzahnten Außenring gedreht und das notwendige Drehmoment aufgezeichnet. Aus diesen Daten werden die Haft- und Gleitreibungskoeffizienten bestimmt. Dieses Verfahren wird in EP 1377812 B1 detailliert beschrieben.

**Tabelle 3: Zusammensetzung der verstärkten Formmassen (Angaben in Gew.-%), Haft- und Gleitreibungskoeffizienten**

| **Inhaltsstoffe** | **Vergleichsbeispiel 10** | **Vergleichsbeispiel. 11** | **Beispiel 6** |
|---|---|---|---|
| PA6 | 69,696 | 69,696 | 69,696 |
| Talkum | 0,02 | 0,02 | 0,02 |
| Glasfaser | 30 | 30 | 30 |
| Kupfer(I)-Iodid | 0,04 | 0,04 | 0,04 |
| Kalium-Bromid | 0,1 | 0,1 | 0,1 |
| Ca-Stearat | 0,144 | | 0,036 |
| Ethylenbisstearylamid | | 0,144 | 0,058 |
| Stearylstearat | | | 0,05 |
| | | | |
| Haftreibungskoeffizient | 0,08 | 0,11 | 0,08 |
| Gleitreibungskoeffizient | 0,08 | 0,1 | 0,08 |

**Tabelle 4: Zusammensetzung der unverstärkten Formmassen (Angaben in Gew.-%), Haft- und Gleitreibungskoeffizienten**

| **Inhaltsstoffe** | **Vergleichsbeispiel 12** | **Vergleichsbeispiel 13** | **Beispiel 7** |
|---|---|---|---|
| PA6 | 99,575 | 99,575 | 99,575 |
| Talkum | 0,025 | 0,025 | 0,025 |
| Ca-Stearat | 0,4 | | 0,1 |
| Ethylenbisstearylamid | | 0,4 | 0,16 |
| Stearylstearat | | | 0,14 |
| | | | |
| Haftreibungskoeffizient | 0,73 | 1,39 | 0,61 |
| Gleitreibungskoeffizient | 0,68 | 1,01 | 0,48 |

In den Beispielen für eine verstärkte Polyamid 6-Formmasse (Tabelle 3) liegen die Werte für Haft- und Gleitreibungskoeffizienten bei Verwendung von Calcium-Stearat (Vergleichsbeispiel 10) und einer erfindungsgemäßen Entformungsmittelkombination (Beispiel 6) auf einem ähnlichen Niveau. Die erfindungsgemäßen Entformungsmittelkombinationen haben jedoch den Vorteil, nicht zu einem Abbau der Polymerketten zu führen (s. Vergleichsbeispiele 1, 2 und 8). Die Formmasse mit Amidwachs als Entformungsmittel (Vergleichsbeispiel 11) zeigt erhöhte Werte für die Haft- und Gleitreibung.

In den Beispielen für unverstärkte Polyamid 6-Formmassen (Tabelle 4) zeigt die Formmasse mit der erfindungsgemäßen Entformungsmittelkombination (Beispiel 7) die niedrigsten Werte für die Haft- und Gleitreibungskoeffizienten. Mit Calcium-Stearat (Vergleichbeispiel 12) oder Amidwachs (Vergleichsbeispiel 13) als Entformungsmittel sind diese Werte leicht (Calcium-Stearat) bzw. deutlich (Amidwachs) erhöht.

### Verwendete Materialien:

Co-Polyamid, bestehend aus Polycaprolactam enthaltend ca. 5 % PA66 Einheiten, linear mit einer relativen Lösungsviskosität einer 1%igen Lösung in m-Kresol von 2,9, z. B. Nylon 5011B von Ube
Polyamid 66, linear mit einer relativen Lösungsviskosität einer 1%igen Lösung in m-Kresol von 3,0, z. B. Zytel 101 NC010
Polyamid 6, linear mit einer relativen Lösungsviskosität einer 1%igen Lösung in m-Kresol von 2,9
Kaliumbromid, d₉₉ < 70 µm
Kupfer(I)-Iodid, d₉₉ < 70 µm
Talkum
Calcium-Stearat, z. B. Ceasit AV von Baerlocher GmbH
Ethylenbisstearylamid, z. B. Acrawax C von Lonza Group Ltd.
Glyzerintristearat, z. B. Ligalub GT von Peter Greven GmbH & Co. KG
Stearylstearat, z. B. Ligalub 36 FE von Peter Greven GmbH & Co. KG
oxidiertes Polyethylenwachs, z. B. Licolub H12 von Clariant GmbH

## Patentansprüche

1. Verwendung einer Entformungsmittelkombination zum Entformen von Kunststoffen, enthaltend
A. mindestens ein Amidwachs und
B. mindestens ein Esterwachs und
C. mindestens ein verseiftes Wachs,
wobei als Amidwachs Ethylenbisstearylamid,
als Esterwachs Ester von wenigstens einer Carbonsäure der Reihe Margarinsäure, Stearinsäure, Arachinsäure und Behensäure mit wenigstens einem Alkohol der Reihe Erythrit, Pentaerythrit, Di-Pentaerythrit, Tri-Pentaerythrit, Trimethylolpropan, Glyzerin, Di-Glyzerin, Tri-Glyzerin, Xylit, Mannit, Sorbit, Ethylenglykol, 1,3-Propylenglykol, 1,4-Butandiol, 2,3-Butandiol, 1,5-pentandiol, 1,6-Hexandiol, Laurylalkohol, Isotridecyalkohol, Myristylalkohol, Palmitylalkohol, Stearylalkohol, Isostearylalkohol, Arachylalkohol, Behenylalkohol, Lignocerylalkohol, Cerotylalkohol, Montanylalkohol sowie deren technische Mischungen eingesetzt werden,
und als verseiftes Wachs Calciumstearat eingesetzt wird,
wobei es sich bei dem Kunststoff um Polyamid handelt.

2. Verwendung gemäß Anspruch 1, **dadurch gekennzeichnet, dass** als Esterwachs Glycerintristearat oder Stearylstearat eingesetzt wird.

3. Verwendung gemäß Anspruch 1 oder 2, **dadurch gekennzeichnet, dass** es sich um Polyamid-basierte oder Copolyamid-basierte Formmassen handelt.

4. Verwendung gemäß Anspruch 3, **dadurch gekennzeichnet, dass** es sich um Polyamid 6- oder Polyamid 66- oder Co-Polyamid-basierte Formmassen und Blends handelt.

## Claims

1. Use of a mould-release agent combination for the demoulding of plastics, comprising
A. at least one amide wax and
B. at least one ester wax and
C. at least one saponified wax,
where amide wax used comprises ethylenebisstearylamide,
and ester wax used comprises esters of at least one carboxylic acid from the group of margaric acid, stearic acid, arachidic acid and behenic acid with at least one alcohol from the group of erythritol, pentaerythritol, dipentaerythritol, tripentaerythritol, trimethylolpropane, glycerol, diglycerol, triglycerol, xylitol, mannitol, sorbitol, ethylene glycol, propylene 1,3-glycol, 1,4-butanediol, 2,3-butanediol, 1,5-pentanediol, 1,6-hexanediol, lauryl alcohol, isotridecyl alcohol, myristyl alcohol, palmityl alcohol, stearyl alcohol, isostearyl alcohol, arachidyl alcohol, behenyl alcohol, lignoceryl alcohol, cerotyl alcohol, montanyl alcohol and technical mixtures of these,
and saponified wax used comprises calcium stearate,
where the plastic is polyamide.

2. Use according to Claim 1, **characterized in that** ester wax used comprises glycerol tristearate or stearyl stearate.

3. Use according to Claim 1 or 2, **characterized in that** the materials involved are polyamide-based or copolyamide-based moulding compositions.

4. Use according to Claim 3, **characterized in that** the materials involved are nylon-6- or nylon-6,6- or copolyamide-based moulding compositions and blends.

## Revendications

1. Utilisation d'une combinaison d'agents de démoulage pour le démoulage de plastiques, contenant :
A. au moins une cire d'amide et
B. au moins une cire d'ester et
C. au moins une cire saponifiée,
de l'éthylène-bis-stéarylamide étant utilisé en tant que cire d'amide,
des esters d'au moins un acide carboxylique de la série constituée par l'acide margarique, l'acide stéarique, l'acide arachidique et l'acide béhénique avec au moins un alcool de la série constituée par l'érythritol, le pentaérythritol, le dipentaérythritol, le tripentaérythritol, le triméthylolpropane, la glycérine, la diglycérine, la triglycérine, le xylitol, le mannitol, le sorbitol, l'éthylène glycol, le 1,3-propylène glycol, le 1,4-butanediol, le 2,3-butanediol, le 1,5-pentanediol, le 1,6-hexanediol, l'alcool laurylique, l'alcool isotridécylique, l'alcool myristylique, l'alcool palmitylique, l'alcool stéarylique, l'alcool isostéarylique, l'alcool arachylique, l'alcool béhénylique, l'alcool lignocérylique, l'alcool cérotylique, l'alcool montanylique, ainsi que leurs mélanges techniques, sont utilisés en tant que cire d'ester,
et le stéarate de calcium est utilisé en tant que cire saponifiée,
le plastique étant un polyamide.

2. Utilisation selon la revendication 1, **caractérisée en ce que** du tristéarate de glycérine ou du stéarate de stéaryle est utilisé en tant que cire d'ester.

3. Utilisation selon la revendication 1 ou 2, **caractérisée en ce qu'**il s'agit de matériaux de moulage à base de polyamide ou à base de copolyamide.

4. Utilisation selon la revendication 3, **caractérisée en ce qu'**il s'agit de matériaux de moulage et de mélanges à base de polyamide 6 ou de polyamide 66 ou de copolyamide.
